# EUROPEAN PATENT APPLICATION

(11) **EP 3 718 733 A1**
(43) Date of publication of application: **07.10.2020**
(21) Application number: 19755079.1
(22) Date of filing: 15.02.2019
(51) Int. Cl.: B29C 45/26, B29C 33/44

(54) **MOLDING METHOD AND MOLDING DEVICE**

(30) Priority: 16.02.2018 JP 2018026484
(71) Applicant: Mitsubishi Heavy Industries, Ltd., Chiyoda-ku Tokyo 100-8332 (JP)
(72) Inventor: IKEDA, Kosuke, Tokyo 100-8332 (JP); WATANABE, Yasunori, Tokyo 100-8332 (JP); SAKON, Kana, Tokyo 100-8332 (JP); OKABE, Ryoji, Tokyo 100-8332 (JP); OKUDA,Akihisa, Tokyo 100-8332 (JP); OZAKI, Ryota, Tokyo 100-8332 (JP)
(74) Representative: Henkel & Partner mbB
(86) International application number: PCT/JP2019/005603
(87) International publication number: WO 2019/160091

(57) **Abstract**

This molding method involves: a first step in which a perforation pin (2) is made to protrude into a void (13) in a mold (1); a second step in which a molten resin (16) is injected to fill the void (13) so as to envelop the protruding part of the perforation pin (2); a third step in which, in a state in which the resin (16) is in an uncured state, the perforation pin (2) is made to protrude further; and a fourth step in which the resin (16) is cured to obtain a resin molded product.

## Description

### Technical Field

The present invention relates to a molding method and a molding device.

This application claims priority based on Japanese Patent Application No. 2018-026484 filed on February 16, 2018, the entire disclosure of which is incorporated herein.

### Background Art

A molded resin article is manufactured by, for example, injection molding. When the molded resin article has a through-hole, the through-hole is formed by a perforation pin provided in a mold. The molten resin introduced into the mold is split into two by the perforation pin and joins on a back surface side of the perforation pin. At the junction, since a resin temperature is slightly decreased, the two resin flows cannot be completely merged, and a weld line may be formed (see, for example, PTL 1). The weld line may cause a decrease in strength of the molded resin article. In addition, the appearance of the molded resin article may be impaired by the weld line.

In the mold used in the molding method disclosed in PTL 1, the perforation pin can be made to protrude with respect to a cavity by a driving device. In this molding method, after filling the cavity, into which the perforation pin is not protruded, with the molten resin, the perforation pin is protruded into the uncured molten resin to form a through-hole. According to this molding method, in a case where the cavity is filled with the molten resin, the flow of the resin is not hindered by the perforation pin, and accordingly, no weld lines are formed.

### Citation List

### Patent Literature

[PTL 1] Japanese Patent No. 2717896

### Summary of Invention

### Technical Problem

In a case of manufacturing a thick molded article by using a high-strength resin such as a super engineering plastic (PEEK, PPS, or PI) or a fiber-containing resin (a resin containing a carbon fiber, a glass fiber, or the like), pressing weight of the perforation pin when forming the through-hole in the resin increases, in the molding method disclosed in PTL 1. Therefore, it may be difficult to form a through-hole. In addition, the installation of the driving device may be difficult, since a large-sized driving device is required to drive the perforation pin.

An object of the invention is to provide a molding method and a molding device which can easily produce a molded resin article having a hole and by which a weld line is hardly generated.

### Solution to Problem

According to an aspect of the invention, there is provided a molding method including a first step of making a perforation pin protrude into a cavity of a mold, a second step of injecting a molten resin and filling the cavity with the molten resin so as to envelop a protruding part of the perforation pin, a third step of making the perforation pin further protrude, in a state where the resin is not cured, and a fourth step of obtaining a molded resin article having a hole by curing the resin and extracting the perforation pin.

According to the molding method, a movement distance of the perforation pin in the third step can be reduced, and the pressing weight in a case of pressing the perforation pin into the resin can be prevented. Accordingly, it is easy to manufacture a molded resin article having a hole. In addition, since the pressing weight can be reduced, a small-sized driving mechanism with a low output can be used, so that a problem hardly occurs in the installation of the driving mechanism. Therefore, a molded resin article can be easily manufactured.

According to the molding method, a weld line is difficult to be formed, since the protrusion length of the perforation pin in the second step is short.

In the first step, a protrusion length of the perforation pin may be 25% to 40% with respect to a dimension of the cavity in a protruding direction of the perforation pin.

Therefore, the pressing weight in a case of making the perforation pin protrude in the third step can be reduced, and the formation of the weld line can be prevented.

In the third step, the perforation pin may penetrate the resin.

Therefore, a molded resin article having a through-hole can be easily manufactured.

In the molding method, the mold includes a first mold and a second mold facing each other with the cavity interposed therebetween, and in the first step, a plurality of the perforation pins are used, and among the plurality of the perforation pins, a first perforation pin is made to protrude into the cavity from the first mold, and a second perforation pin is made to protrude into the cavity from the second mold.

According to the molding method, since the plurality of perforation pins are used, the movement distance per perforation pin in the third step can be reduced. Therefore, the pressing weight can be reduced.

According to another aspect of the invention, there is provided a molding device including a mold for injection molding, a perforation pin capable of protruding into a cavity of the mold, a driving mechanism for the perforation pin, and a control section which controls a protrusion length of the perforation pin in the cavity.

According to the molding device, since the control section is provided, the pressing weight of the perforation pin is prevented by making the perforation pin protrude in a plurality of stages, thereby facilitating the manufacturing of the molded resin article. The molding device can set the protrusion length of the perforation pin in the first step to be short, thereby preventing a weld line.

### Advantageous Effects of Invention

According to one aspect of the invention, a molded resin article having a hole can be easily manufactured, and a weld line is hardly generated.

### Brief Description of Drawings

Fig. 1 is a schematic view of a molding device used in a molding method according to a first embodiment.
Fig. 2 is a schematic view showing a first step of the molding method according to the first embodiment.
Fig. 3 is a schematic view showing a second step of the molding method according to the first embodiment.
Fig. 4 is a schematic view showing the second step of the molding method according to the first embodiment.
Fig. 5 is a schematic view showing a third step of the molding method according to the first embodiment.
Fig. 6 is a schematic view showing a fourth step of the molding method according to the first embodiment.
Fig. 7 is a process drawing showing details of the second step of the molding method according to the first embodiment.
Fig. 8 is a process drawing following the previous drawing.
Fig. 9 is a process drawing following the previous drawing.
Fig. 10 is a process drawing following the previous drawing.
Fig. 11 is a schematic view of a molding device used in a molding method according to a second embodiment.
Fig. 12 is a schematic view showing a first step of the molding method according to a second embodiment.
Fig. 13 is a schematic view showing a second step of the molding method according to the second embodiment.
Fig. 14 is a schematic view showing a third step of the molding method according to the second embodiment.
Fig. 15 is a diagram showing a relationship between a pressing weight ratio and a thickness ratio of a perforation pin and a relationship between a joining angle of a molten resin and the thickness ratio in an example and comparative examples.

### Description of Embodiments

Hereinafter, embodiments to which the invention is applied will be described in detail with reference to the drawings. The drawings used in the following description are for describing the configuration of the embodiments of the invention, and sizes, thicknesses, dimensions, and the like of each portion shown in the drawings may be different from dimensional relationships of the actual device.

### [First Embodiment] (Molding Device)

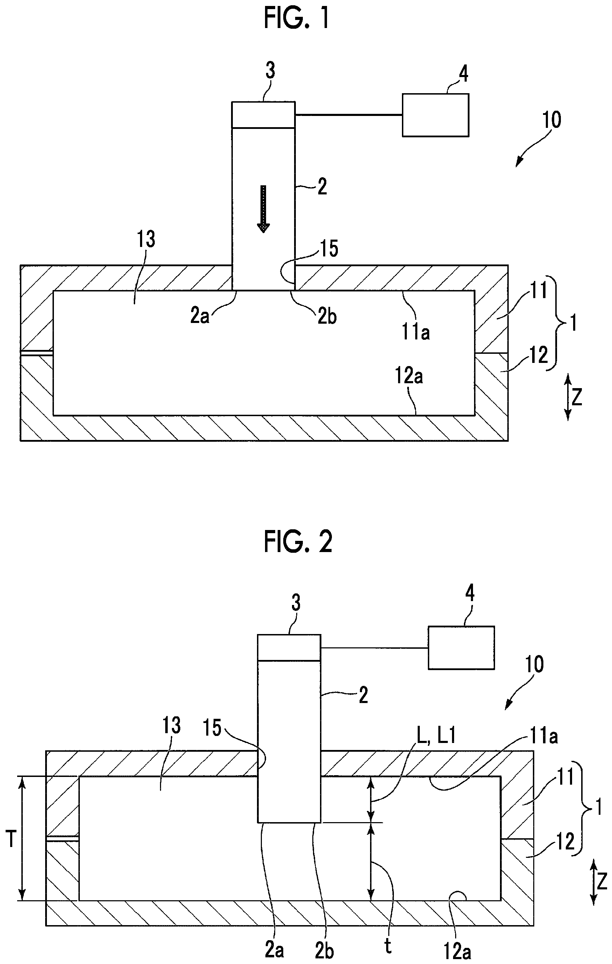

Fig. 1 is a schematic view of a molding device 10 (a manufacturing device of a molded resin article) used in a molding method (a manufacturing method of a molded resin article) according to a first embodiment. Figs. 2 to 6 are schematic views showing each step of the molding method according to the first embodiment.

As shown in Fig. 1, the molding device 10 includes a mold 1, a perforation pin 2, a driving mechanism 3, and a control section 4.

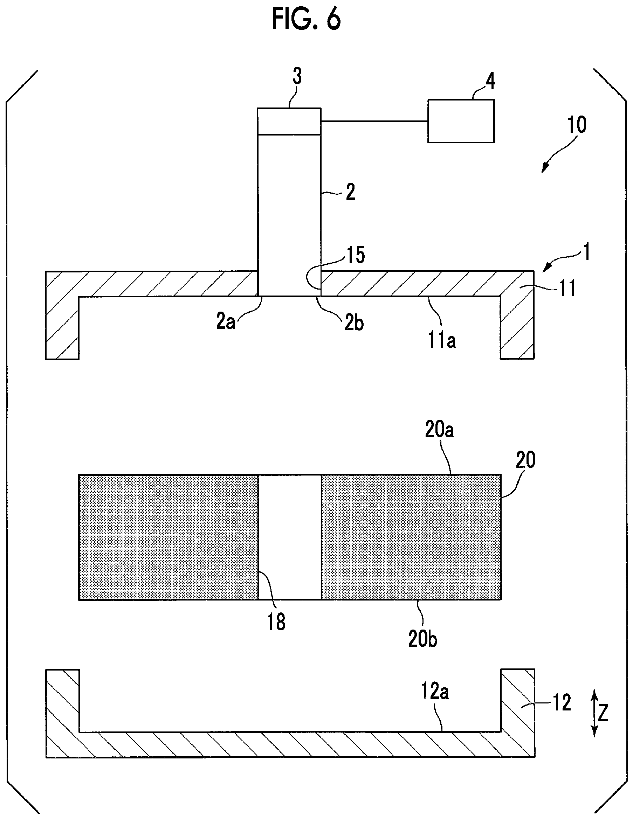

The mold 1 is a mold for injection molding and includes a first mold 11 and a second mold 12. A cavity 13 is provided between the first mold 11 and the second mold 12. The cavity 13 has a shape corresponding to the molded resin article 20 to be manufactured (see Fig. 6). An inner surface 11a of the first mold 11 and an inner surface 12a of the second mold 12 face each other with the cavity 13 interposed therebetween. A thickness direction of the cavity 13 (vertical direction in Fig. 1) is also referred to as a Z direction.

The first mold 11 has an insertion hole 15 through which the perforation pin 2 is inserted. The inner surface 11a of the first mold 11 faces the cavity 13. The inner surface 11a has a shape conforming to a first surface 20a of the molded resin article 20 (see Fig. 6).

The inner surface 12a of the second mold 12 faces the cavity 13. The inner surface 12a has a shape conforming to a second surface 20b of the molded resin article 20 (see Fig. 6). The second surface 20b is a surface opposite to the first surface 20a of the molded resin article 20.

The perforation pin 2 may have a columnar shape having a central axis along the thickness direction (Z direction) of the cavity 13, for example, a columnar shape, a prismatic shape (a quadrangular prism shape, a triangular prism shape, or the like). A length direction of the perforation pin 2 (perforation member) faces the thickness direction (vertical direction in Fig. 1) (Z direction) of the cavity 13. The perforation pin 2 is inserted through the insertion hole 15. The perforation pin 2 is configured such that a portion 2b including a leading end 2a can protrude with respect to the cavity 13 of the mold 1.

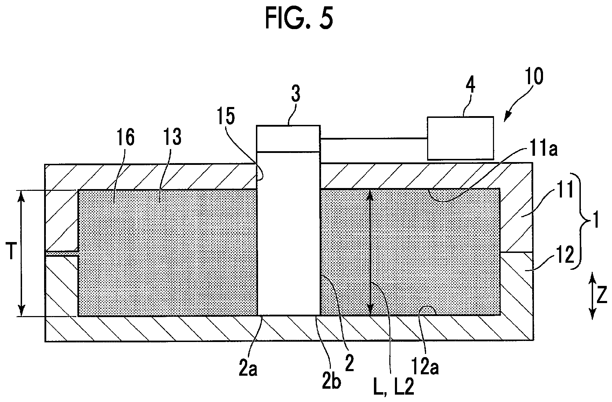

The perforation pin 2 is movable in the length direction (vertical direction in Fig. 1) (Z direction). Accordingly, the perforation pin 2 is configured to be able to protrude with respect to the cavity 13 of the mold 1. The perforation pin 2 can be provided at a position (non-protruding position) where the perforation pin does not protrude from the inner surface 11a into the cavity 13 (see Fig. 1), or can be provided at a position (protruding position) where the portion 2b including the leading end 2a protrudes from the inner surface 11a into the cavity 13 (see Figs. 2 to 5). At the most lowered position (most protruding position), the leading end 2a of the perforation pin 2 comes into contact with the inner surface 12a of the second mold 12 (see Fig. 5).

As shown in Fig. 2, a distance of the cavity 13 in the thickness direction (vertical direction in Fig. 2) (Z direction) is referred to as a "total thickness T". The total thickness T is a dimension of the cavity 13 in a protruding direction of the perforation pin 2 (vertical direction in Fig. 2). The thickness dimension of the cavity at the leading end 2a of the perforation pin 2, that is, a distance between the leading end 2a and the inner surface 12a in the Z direction (vertical direction in Fig. 2) is referred to as a "thickness t". "Thickness t/total thickness T" is referred to as a "thickness ratio". As shown in Fig. 1, when the perforation pin 2 is at the non-protruding position, the thickness t is equal to the total thickness T, and thus the thickness ratio is 1. As shown in Fig. 5, when the perforation pin 2 is at the most protruding position, the thickness t is zero, and thus the thickness ratio is zero.

The driving mechanism 3 is, for example, a motor or the like, and can move the perforation pin 2 in a protruding direction (downward in Fig. 1) and in the opposite direction thereof.

The control section 4 can drive the driving mechanism 3 based on position information of the perforation pin 2 detected by a sensor (for example, an optical sensor) (not shown), and control a length of the perforation pin 2 in the protruding direction (the protrusion dimension from the inner surface 11a).

### [First Embodiment] (Molding Method)

Next, a molding method according to the first embodiment will be described with reference to Figs. 1 to 6.

### (First Step)

In the molding device 10 shown in Fig. 1, the perforation pin 2 is at a non-protruding position (position not protruding from the inner surface 11a into the cavity 13).

As shown in Fig. 2, the driving mechanism 3 is operated by the control section 4, and the portion 2b including the leading end 2a of the perforation pin 2 is protruded into the cavity 13. The protrusion length of the perforation pin 2 is referred to as "L". The protrusion length L is a dimension from the inner surface 11a of the first mold 11 to the leading end 2a of the perforation pin 2 in the Z direction (thickness direction of the cavity 13). The protrusion length L of the perforation pin 2 in the first step is "L1".

The protrusion length L1 of the perforation pin 2 in the first step is smaller than the total thickness T of the cavity 13. Therefore, the leading end 2a of the perforation pin 2 does not reach the inner surface 12a of the second mold 12.

It is desirable that the protrusion length L1 is 25% to 40% of the total thickness T. When the protrusion length L1 is 25% or more of the total thickness T, the pressing weight can be reduced when making the perforation pin 2 further protrude in the third step which will be described later. When the protrusion length L1 is 40% or less of the total thickness T, formation of a weld line in the molded resin article 20 (see Fig. 6) can be prevented.

### (Second Step)

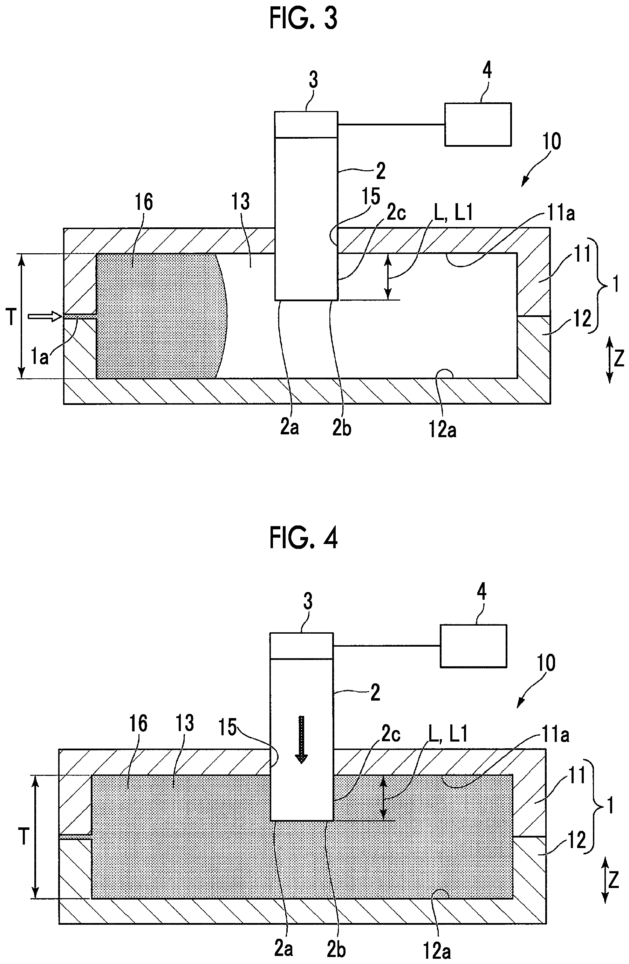

As shown in Figs. 3 and 4, a molten resin 16 is introduced (injected) into the cavity 13 of the mold 1 from a resin introduction hole 1a. An introduction direction of the resin 16 is not particularly limited, and is, for example, a direction that intersects the Z direction (protruding direction of the perforation pin 2). For example, the introduction direction of the resin 16 is a direction orthogonal to the Z direction.

As the resin 16, a thermoplastic resin is preferable. Examples of the thermoplastic resin include polyetheretherketone (PEEK), polyphenylenesulfide (PPS), polyimide (PI), polyethersulfone (PES), aromatic polyamide (PA), and polyamideimide (PAI). The resin 16 may be a fiber reinforcing resin. As the fiber reinforcing resin, for example, a carbon fiber reinforcing resin, a glass fiber reinforcing resin, or the like can be used. A tensile strength (for example, based on ASTM D638) of the molded resin article made of the resin 16 is, for example, 90 MPa or more (for example, 90 MPa to 262 MPa).

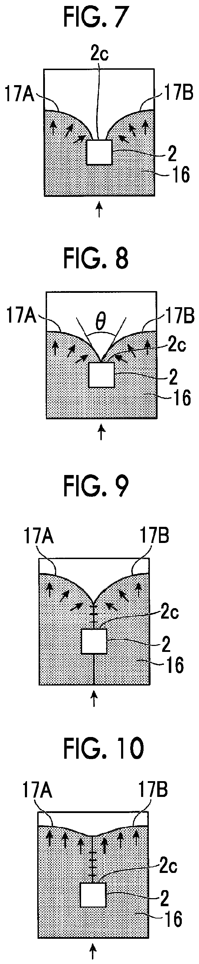

Figs. 7 to 10 are process diagrams showing the details of the second step, and are schematic views showing a flow of the resin 16 seen from a direction parallel to the Z direction. As shown in Fig. 7, the resin 16 that has reached the perforation pin 2 is divided into a plurality of directions, goes around the perforation pin 2 and joins. As shown in Fig. 8, a joining angle in a case where a resin flow 17A in a direction around one axis of the perforation pin 2 and a resin flow 17B in a direction around the other axis of the perforation pin 2 joins on a side of a back surface 2c of the perforation pin 2 is referred to as "θ". The joining angle θ is, for example, an angle formed by surfaces of the resin flows 17A and 17B that joins on the back surface 2c at the same height position as the inner surface 11a (see Figs. 3 and 4).

As shown in Figs. 9 and 10, the resin 16 flows including the protruding part of the perforation pin 2, and is filled in the cavity 13 as shown in Fig. 4.

As shown in Figs. 3 and 4, since the protrusion length L1 of the perforation pin 2 is short, a weld line is not easily formed. The reason that the weld line is not easily formed can be assumed as follows. Since the protrusion length L1 of the perforation pin 2 is short, the resin 16 that has come into contact with the perforation pin 2 is not only easily divided in the direction around the axis of the perforation pin 2, but also in other directions (for example, direction going around the back surface 2c from the leading end side of the perforation pin 2). For this reason, the resin flows in many directions join on the back surface 2c of the perforation pin 2, and therefore, the joining angle θ shown in Fig. 8 is easily increased. If the joining angle θ is large, a weld line is hardly formed. For example, if the joining angle θ is 135° or more, a weld line is hardly formed.

### (Third Step)

As shown in Fig. 5, in a state where the resin 16 is not cured, the driving mechanism 3 is operated by the control section 4 to further protrude the perforation pin 2. That is, the protrusion length L of the perforation pin 2 is set as a protrusion length L2 longer than the protrusion length L1 (see Fig. 4). The protrusion length L2 is equal to the total thickness T of the cavity 13. The perforation pin 2 is positioned at the most lowered position (most protruding position), and the leading end 2a comes into contact with the inner surface 12a of the second mold 12. Therefore, the perforation pin 2 penetrates the resin 16.

In this step, a movement distance of the perforation pin 2 to the most protruding position when making the perforation pin 2 protrude is smaller than a movement distance of the perforation pin 2 from the non-protruding position (see Fig. 1) to the most protruding position. Therefore, the pressing weight when the perforation pin 2 is pushed into the resin 16 can be suppressed. Therefore, it is easy to form the through-hole 18 (see Fig. 6) by the perforation pin 2. In addition, since the pressing weight can be reduced, a small-sized driving mechanism 3 with a low output can be used. Therefore, a problem hardly occurs in the installation of the driving mechanism 3.

### (Fourth Step)

As shown in Fig. 6, the resin 16 (see Fig. 5) is cured by cooling or the like. The resin 16 may be cooled using a coolant such as water or air, or may be allowed to cool. The cured resin 16 becomes the molded resin article 20. The molded resin article 20 is taken out of the mold 1. The perforation pin 2 is extracted from the molded resin article 20. In the molded resin article 20, the portion where the perforation pin 2 was located becomes the through-hole 18.

According to the molding method of the first embodiment, the cavity 13 is filled with the resin 16 in a state where the perforation pin 2 is protruded (see Figs. 3 and 4) in the second step, and the perforation pin 2 is further protruded in the third step (see Fig. 5). Accordingly, the movement distance of the perforation pin 2 in the third step can be reduced, and the pressing weight when the perforation pin 2 is pushed into the resin 16 can be suppressed. Therefore, it is easy to manufacture the molded resin article 20 having the through-holes 18 (see Fig. 6). In addition, since the pressing weight can be reduced, a small-sized driving mechanism 3 with a low output can be used, so that a problem hardly occurs in the installation of the driving mechanism 3. Thus, the molded resin article 20 can be easily manufactured.

According to the molding method of the first embodiment, since the protrusion length L1 (see Figs. 3 and 4) of the perforation pin 2 in the second step is short, a weld line is not easily formed as described above.

In the molding method of the first embodiment, the perforation pin 2 penetrates the resin 16 in the third step, so that the molded resin article 20 having the through-hole 18 can be easily manufactured.

Since the molding device 10 includes the control section 4, the pressing weight of the perforation pin 2 is suppressed by making the perforation pin 2 protrude in two stages, and the molded resin article 20 is easily manufactured. The molding device 10 can set the protrusion length L1 of the perforation pin 2 in the first step to be short by the control section 4, so that the weld line can be prevented.

### [Second Embodiment] (Molding Device)

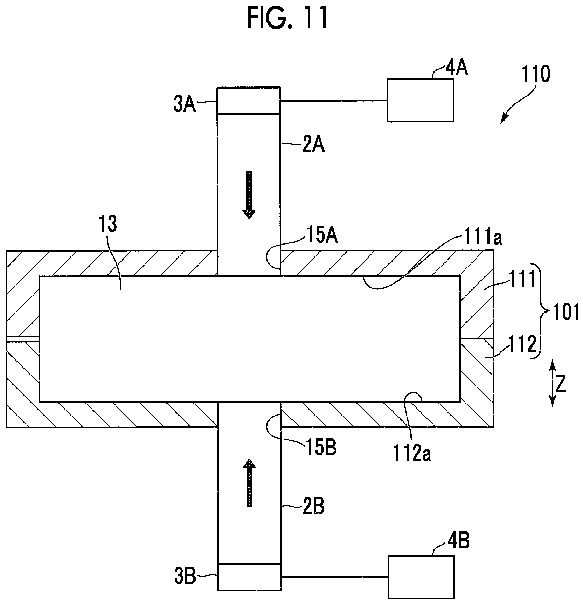

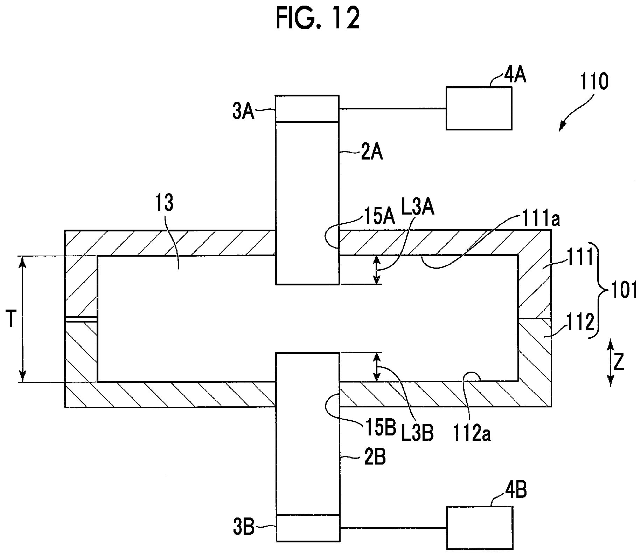

Fig. 11 is a schematic view of a molding device 110 used in a molding method according to a second embodiment. Figs. 12 to 14 are schematic views showing each step of the molding method according to the second embodiment.

The molding device 110 includes a mold 101, perforation pins 2A and 2B, driving mechanisms 3A and 3B, and control sections 4A and 4B.

The mold 101 is a mold for injection molding and includes a first mold 111 and a second mold 112. A cavity 13 is provided between the first mold 111 and the second mold 112. An inner surface 111a of the first mold 111 and an inner surface 112a of the second mold 112 face each other with the cavity 13 interposed therebetween. The first mold 111 has an insertion hole 15A through which the first perforation pin 2A is inserted. The second mold 112 has an insertion hole 15B through which the second perforation pin 2B is inserted.

The perforation pins 2A and 2B are movable in the length direction and can protrude with respect to the cavity 13.

The driving mechanisms 3A and 3B are, for example, motors or the like, and can move the perforation pins 2A and 2B respectively in a protruding direction and in the opposite direction thereof.

The control sections 4A and 4B can drive the driving mechanism 3 based on position information of the perforation pins 2A and 2B detected by a sensor (not shown), and control a length of the perforation pins 2A and 2B in the protruding direction.

### [Second Embodiment] (Molding Method)

Next, a molding method according to the second embodiment will be described with reference to Figs. 11 to 14.

### (First Step)

In the molding device 110 shown in Fig. 11, the perforation pins 2A and 2B are at the non-protruding position.

As shown in Fig. 12, the driving mechanisms 3A and 3B are operated by the control section 4, and the portions including leading ends of the perforation pins 2A and 2B are protruded into the cavity 13.

A total of protrusion lengths L3A and L3B of the perforation pins 2A and 2B in the first step is smaller than the total thickness T of the cavity 13. Accordingly, the leading ends of the perforation pins 2A and 2B do not come into contact each other. It is desirable that the total of the protrusion lengths L3A and L3B is 25% to 40% of the total thickness T. Therefore, the pressing weight in a case of making the perforation pins 2A and 2B protrude in the third step can be reduced, and the formation of the weld line can be prevented.

### (Second Step)

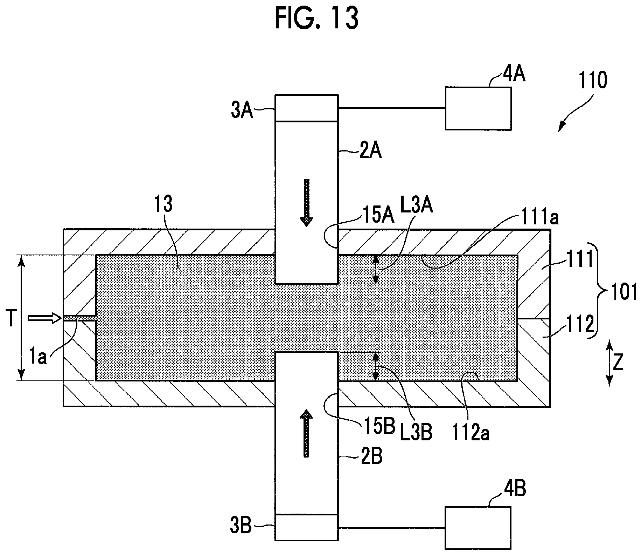

As shown in Fig. 13, the molten resin 16 is introduced (injected) into the cavity 13 of the mold 101 from the resin introduction hole 1a. An introduction direction of the resin 16 is, for example, a direction that intersects the Z direction (protruding direction of the perforation pins 2A and 2B) (for example, direction orthogonal to the Z direction). The resin 16 includes the protruding parts of the perforation pins 2A and 2B, and is filled in the cavity 13. In this case, since the protrusion lengths L3A and L3B of the perforation pins 2A and 2B are short, a weld line is not easily formed.

### (Third Step)

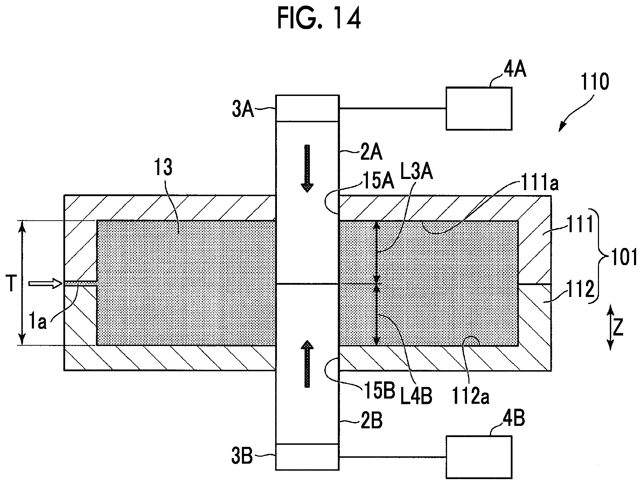

As shown in Fig. 14, the driving mechanisms 3A and 3B are operated by the control sections 4A and 4B to further protrude the perforation pins 2A and 2B, in a state where the resin 16 is not cured. The leading ends of the perforation pins 2A and 2B come into contact with each other. Therefore, the perforation pins 2A and 2B penetrate the resin 16. A total of protrusion lengths L4A and L4B of the perforation pins 2A and 2B in the third step is greater than the total of the protrusion lengths L3A and L3B.

### (Fourth Step)

The resin 16 is cured by cooling or the like. The cured resin 16 becomes the molded resin article 20 (see Fig. 6). The molded resin article 20 is taken out of the mold 101. The perforation pins 2A and 2B are extracted from the molded resin article 20. In the molded resin article 20, the portion where the perforation pins 2A and 2B were located becomes the through-hole 18 (see Fig. 6).

According to the molding method of the second embodiment, the cavity 13 is filled with the resin 16 in a state where the perforation pins 2A and 2B are protruded in the second step (see Fig. 13), and the perforation pins 2A and 2B are further protruded in the third step (see Fig. 14). Therefore, the pressing weight when the perforation pins 2A and 2B are pushed into the resin 16 can be suppressed. Therefore, it is easy to manufacture the molded resin article 20 having the through-holes 18 (see Fig. 6).

In the molding method of the second embodiment, since two perforation pins 2A and 2B are used, the movement distance of the perforation pins 2A and 2B in the third step (movement distance per perforation pin) can be reduced, compared to that in the molding method of the first embodiment. Therefore, the pressing weight can be reduced.

According to the molding method of the second embodiment, since the protrusion lengths L3A and L3B of the perforation pins 2A and 2B in the second step are short, and accordingly, a weld line is not easily formed. In the molding method of the second embodiment, since two perforation pins 2A and 2B are used, the protrusion length of the perforation pins 2A and 2B in the second step (protrusion length per perforation pin) can be reduced, compared to that in the molding method of the first embodiment. Therefore, a weld line is not easily formed.

In the molding method of the second embodiment, the perforation pins 2A and 2B penetrate the resin 16 in the third step, so that the molded resin article 20 having the through-hole 18 can be easily manufactured.

### (Example)

As shown below, the pressing weight and the joining angle when manufacturing the molded resin article 20 by the molding method of the first embodiment were evaluated by using the molding device 10 shown in Fig. 1. The perforation pin 2 has a circular shape (outer diameter of 3.6 mm) when seen from the length direction.

As shown in Fig. 2, the driving mechanism 3 made the perforation pin 2 protrude into the cavity 13 (first step). As shown in Figs. 3 and 4, the molten resin 16 is introduced into the cavity 13 of the mold 1 (second step). As shown in Fig. 5, in a state where the resin 16 is not cured, the driving mechanism 3 made the perforation pin 2 further protrude (third step). As shown in Fig. 6, the resin 16 was cured, and the molded resin article 20 was taken out of the mold 1 (fourth step).

In the example, the thickness ratio (thickness t/total thickness T in Fig. 2) is in a range of 0.25 to 0.75.

### (Comparative Examples)

For comparison, the same evaluation test as in the example was performed, except that the perforation pin 2 was not protruded in the first step (that is, the thickness ratio was set to 1) (Comparative Example 1). In addition, the same evaluation test as in the example was performed, except that the perforation pin 2 was set at the most protruding position in the first step (that is, the thickness ratio was set to zero) (Comparative Example 2). In Comparative Example 2, since the perforation pin 2 is at the most protruding position in the first step, the perforation pin 2 does not move in the third step.

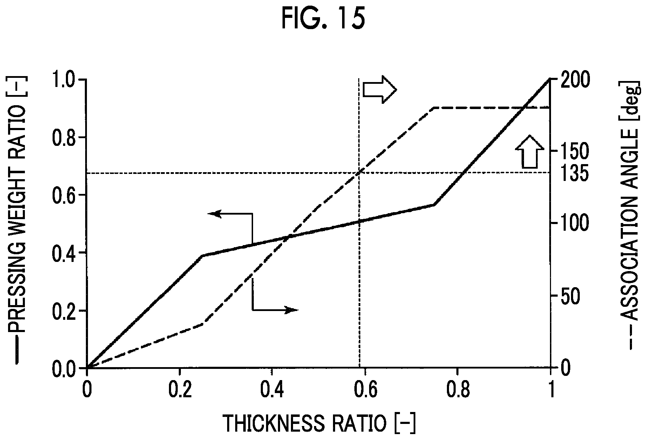

Fig. 15 is a diagram showing a relationship between a pressing weight ratio and a thickness ratio of a perforation pin and a relationship between a joining angle (see Fig. 8) of a molten resin and the thickness ratio in an example and comparative examples. The "pressing weight ratio" is a ratio "W1/W2" of a pressing weight W1 in the third step and a pressing weight W2 in the third step in the case of the thickness ratio 1 (Comparative Example 1).

From Fig. 15, it can be said that in the example (thickness ratio of 0.25 to 0.75), the pressing weight is lower than that in Comparative Example 1 (thickness ratio of 1), so that a molded resin article can be easily manufactured. In the example, the joining angle is larger than that in Comparative Example 2 (thickness ratio of zero) .

In particular, in a case where the thickness ratio is 0.6 or more, it is considered that a weld line is hardly formed, since the joining angle is 135° or more. Therefore, at least in a range of the thickness ratio of 0.6 to 0.75, it can be said that good results were obtained for both the joining angle in the second step and the pressing weight in the third step. The thickness ratio of 0.6 corresponds to that a ratio of the protrusion length of the perforation pin 2 in the first step to the thickness dimension of the cavity 13 is 40%. The thickness ratio 0.75 corresponds to the ratio of 25%.

Hereinabove, the preferred embodiments of the invention have been described in detail, but the invention is not limited to such specific embodiments, and various modifications or changes may be made within the gist of the invention described in the appended claims.

For example, in the molding methods of the first embodiment and the second embodiment, the perforation pin penetrates the resin in the third step, but the perforation pin may not penetrate the resin. Therefore, the hole formed in the molded resin article may be not a through-hole.

In the molding methods of the first embodiment and the second embodiment, the perforation pin is protruded in two stages, but the number of stages in which the perforation pin is protruded may be any number of three or more.

The number of perforation pins used in the molding method of the first embodiment is 1, and the number of perforation pins used in the molding method of the second embodiment is 2, but the number of perforation pins used in resin molding may be any number of 3 or more. In addition, the number of holes formed in the molded resin article is not limited to one, and may be any number of 2 or more.

### Industrial Applicability

According to the molding method and the molding device described above, a molded resin article having a hole can be easily manufactured, and a weld line is hardly generated.

### Reference Signs List

1, 101 mold
2, 2A, 2B perforation pin
3, 3A, 3B driving mechanism
4, 4A, 4B control section
10, 110 molding device
11, 111 first mold
12, 112 second mold
13 cavity
16 resin
18 through-hole (hole)
20 molded resin article
L, L1, L2, L3A, L3B, L4A, L4B protrusion length
T total thickness (dimension of cavity in the protruding direction)

## Claims

1. A molding method comprising:
a first step of making a perforation pin protrude into a cavity of a mold;
a second step of injecting a molten resin and filling the cavity with the molten resin so as to envelop a protruding part of the perforation pin;
a third step of making the perforation pin further protrude, in a state where the resin is not cured; and
a fourth step of obtaining a molded resin article having a hole by curing the resin and extracting the perforation pin.

2. The molding method according to claim 1,
wherein, in the first step, a protrusion length of the perforation pin is 25% to 40% with respect to a dimension of the cavity in a protruding direction of the perforation pin.

3. The molding method according to claim 1 or 2, wherein, in the third step, the perforation pin penetrates the resin.

4. The molding method according to any one of claims 1 to 3,
wherein the mold includes a first mold and a second mold facing each other with the cavity interposed therebetween, and
in the first step, a plurality of the perforation pins are used, and among the plurality of the perforation pins, a first perforation pin is made to protrude into the cavity from the first mold, and a second perforation pin is made to protrude into the cavity from the second mold.

5. A molding device comprising:
a mold for injection molding;
a perforation pin capable of protruding into a cavity of the mold;
a driving mechanism for the perforation pin; and
a control section which controls a protrusion length of the perforation pin in the cavity.
